# EUROPÄISCHE PATENTSCHRIFT

(11) **EP 0 950 564 B1**
(45) Veröffentlichungstag und Bekanntmachung des Hinweises auf die Patenterteilung: **30.05.2007**
(21) Anmeldenummer: 99106968.3
(22) Anmeldetag: 09.04.1999
(51) Int. Cl.: B60Q 1/38, B60Q 11/00, B60Q 1/46

(54) **Elektronischer Blinkgeber**
Electronic blinker
Clignoteur électronique

(30) Priorität: 18.04.1998 DE 19817335
(43) Veröffentlichungstag der Anmeldung: 20.10.1999
(73) Patentinhaber: ATMEL Germany GmbH, 74072 Heilbronn (DE)
(72) Erfinder: Schropp, Roland, 74235 Erlenbach (DE); Fritz, Andreas, 74336 Brackenheim (DE)

(56) Entgegenhaltungen:
- EP-A- 0 870 646
- DE-A1- 4 113 455
- DE-A1- 4 134 031
- DE-A1- 4 137 611

## Beschreibung

Die Erfindung betrifft einen elektronischen Blinkgeber zum Warnblinken für ein Fahrzeug nach dem Oberbegriff des Patentanspruchs 1.

Damit einerseits die Funktion "Warnblinken" in einen elektronischen Blinkgeber integriert werden kann, um ohne die früher gebräuchlichen, zusätzlichen mechanischen Schalter auszukommen, und damit andererseits für einen solchen elektronischen Blinkgeber ein 8-poliges Gehäuse genügt, muß ein Steuereingang des elektronischen Blinkgebers für zwei verschiedene Funktionen verwendet werden, wie im weiteren erläutert werden soll.

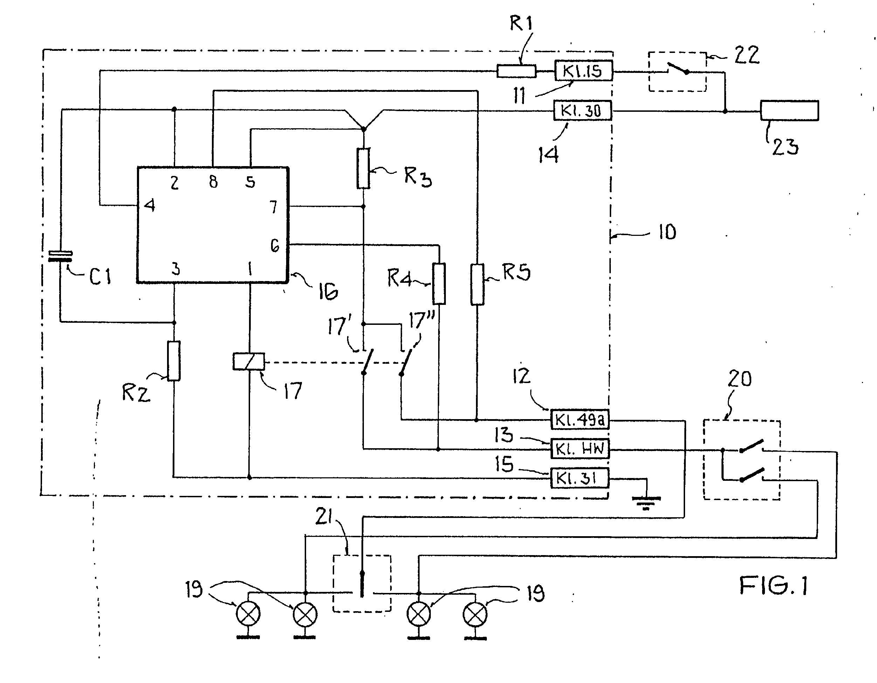

Gemäß der **Fig. 1,** die ein Prinzipschaltbild eines Blinkschaltkreises darstellt, weist ein Integrierter Schaltkreis **16** eines elektronischen Blinkgebers **10** mit Blinklampen **19** einen Steuereingang **6** auf, der den Integrierten Schaltkreis **16** über einen Widerstand **R₄** und mittels eines Warnblinkschalters **20** beim Verbinden mit dem Bezugspotential in die Betriebsart "Warnblinken" schaltet, und einen Relaistreiberausgang **1**, der ein Relais **17** mit Relaiskontakten **17'** und **17"** ansteuert. Der zweite Anschluß des Relais **17** ist über einen Anschluß **15** (Klemme 31) mit dem Bezugspotential verbunden. Der Relaiskontakt **17'** stellt einerseits über einen Widerstand **R₃** (Shunt) und einen Anschluß **14** (Klemme 30) und andererseits über einen Anschluß **13** (Klemme HW) und den Warnblinkschalter **20** die Verbindung zwischen der Fahrzeugbatterie **23** und den Blinklampen **19** her.

Wird der Warnblinkschalter **20** geschlossen, liegt am Steuereingang **6** über den Widerstand **R₄,** den Warnblinkschalter **20** und die Blinklampen **19** kurzzeitig Massepotential, wodurch der Integrierte Schaltkreis **16** in die Betriebsart "Warnblinken" geschaltet wird. Sobald das Relais **17** seinen Kontakt **17'** geschlossen hat, liegt am Steuereingang **6** über den Anschluß **14,** den Shunt **R₃** und den Widerstand **R₄** die Versorgungsspannung der Fahrzeugbatterie **23** an, wodurch die Betriebsart "Warnblinken" ausgeschaltet wird. Da aber der Warnblinkschalter **20** weiterhin geschlossen ist, wird beim Öffnen des Relaiskontaktes **17'** die Betriebsart "Warnblinken" wieder eingeschaltet, so daß der Integrierte Schaltkreis **16** in einen Schwingbetrieb übergeht.

Um diesen Schwingbetrieb zu verhindern, muß im Integrierten Schaltkreis **16** eine Signalhalteschaltung dafür sorgen, daß das durch das Schließen des Warnblinkschalters **20** am Steuereingang **6** liegende Massepotential aufrecht erhalten wird, solange der Warnblinkschalter **20** geschlossen ist.

Die aus der deutschen Patentschrift DE 41 13 455 C2 bekannte analoge Schaltungsanordnung mit der benötigten Haltefunktion weist den Nachteil auf, daß in der Betriebsart "Warnblinken" zur Aufrechterhaltung des Low-Pegels zusätzlich ein in den Integrierten Schaltkreis (IC) integrierter Widerstand (R₈), ein zweiter externer Shunt (R₇) und ein Komparator (K₁) benötigt werden. Da der Komparator (K₁) auch bei ausgeschalteter Zündung aktiv gehalten werden muß, um die Betriebsart "Warnblinken" einschalten zu können, fließt ein Ruhestrom von typisch 100 µA.

Es ist deshalb Aufgabe der Erfindung, einen elektronischen Blinkgeber zum Warnblinken anzugeben, welcher die genannten Nachteile vermeidet.

Diese Aufgabe wird gelöst durch einen elektronischen Blinkgeber für ein Fahrzeug zum Warnblinken, mit einer Eingangskomparatorschaltung mit einem Warnblinkeingang zum Vergleich eines Einschaltsignals eines Warnblinkschalters mit einem Schwellenwert, mit einer Spannungsversorgungsschaltung mit Batterieanschluß zur Spannungsversorgung des elektronischen Blinkgebers, mit einer Relaistreiberschaltung mit Relaistreiberausgang zum Ansteuern eines Blinkrelais und mit einer Steuereinheit zur zeitlichen Steuerung von Hell- und Dunkelphasen von Blinklampen beim Blinken, der dadurch gekennzeichnet ist, daß
- die Eingangskomparatorschaltung zum Einschalten der Spannungsversorgung beim Schließen des Warnblinkschalters mittels einer ersten Verbindungsleitung mit der Spannungsversorgungsschaltung verbunden ist,
- die Eingangskomparatorschaltung über die erste Verbindungsleitung auch mit einer Signalhalteschaltung zum Setzen eines Haltesignals während der Hellphasen bei geschlossenem Warnblinkschalter verbunden ist,
- die Steuereinheit zur Steuerung des Zeitablaufs der Hell- und Dunkelphasen mittels einer Datenleitung mit der Relaistreiberschaltung verbunden ist,
- die Steuereinheit mittels einer zweiten Verbindungsleitung mit der Signalhalteschaltung zum Zurücksetzen des Haltesignals bei geöffnetem Warnblinkschalter verbunden ist und
- die Signalhalteschaltung mittels einer dritten Verbindungsleitung mit der Spannungsversorgungsschaltung zur Aufrechterhaltung der Spannungsversorgung bei gesetztem Haltesignal und zum Abschalten der Spannungsversorgung bei zurückgesetztem Haltesignal verbunden ist.

Die Vorteile der Erfindung liegen darin, daß für den erfindungsgemäßen elektronischen Blinkgeber nur wenige externe Bauelemente benötigt werden und mit Ausnahme einiger Speicherzellen alle internen Schaltungsteile bei ausgeschaltetem Warnblinkschalter abgeschaltet sind, so daß die Schaltungsanordnung einen Ruhestrom von nur noch 10 µA aufweist.

Vorteilhafte Weiterbildungen der Erfindung sind in den Unteransprüchen beschrieben.

Ein Ausführungsbeispiel der Erfindung ist nachstehend ausführlich erläutert und anhand der Figuren dargestellt.

Es zeigen
- Fig. 1:: ein Prinzipschaltbild eines elektronischen Blinkgebers mit einem Integrierten Schaltkreis,
- Fig. 2:: einen Teil der im Integrierten Schaltkreis enthaltenen Schaltungsanordnung und
- Fig. 3a-c:: Zeitdiagramme von Signalverläufen an verschiedenen Anschlußpins des Integrierten Schaltkreises in der Betriebsart "Warnblinken".

Gemäß dem in **Fig. 1** dargestellten Prinzipschaltbild weist der elektronische Blinkgeber **10** drei Steuereingänge auf: Zündung **11** (Klemme 15), Richtungsblinkschalter **12** (Klemme 49a) und Warnblinkschalter **13** (Klemme HW); als weitere Klemmen neben diesen drei Steuereingängen sind noch der Batterieanschluß **14** (Klemme 30) und der Bezugspotentialanschluß **15** (Klemme 31) vorgesehen. Der Integrierte Schaltkreis **16** des elektronischen Blinkgebers **10** besitzt acht externe Anschlußpins **1** bis **8,** das heißt, er kann beispielsweise in einem achtpoligen DIP-Gehäuse oder SO8-Gehäuse angeordnet werden.

Als Anschlußpins des Integrierten Schaltkreises **16** sind beispielsweise der sogenannte Relaistreiberausgang **1** (an den statt der Wicklung eines Relais auch beispielsweise die Basis eines Power-MOSFETs angeschlossen sein kann), ein Anschluß **2** für die an Klemme 30 anliegende Batteriespannung **V_{batt,}** ein Anschluß **3** für das Bezugspotential des Integrierten Schaltkreises **16,** ein Eingang **4** für die Klemme 15 (Zündungseingang), ein Warnblinkeingang **6,** ein Meßeingang **7,** ein Eingang **5,** der ebenfalls mit der Batteriespannung an Klemme 30 verbunden ist und das Bezugspotential für den Meßeingang **7** darstellt, und ein Richtungsblinkeingang **8** vorgesehen.

Zwischen den Anschlüssen **2** und **3** ist ein Kondensator **C₁** angeordnet, der bei negativen Störspannungen als Stützkapazität wirkt. Ohmsche Widerstände **R₁, R₂, R₄** bzw. **R₅** sind zum Schutz des Integrierten Schaltkreises **16** gegen Störimpulse und Verpolung in den Zuleitungen zu den Anschlüssen **4, 3, 6** bzw. **8** angeordnet. Ein niederohmiger Widerstand **R₃** (mit z. B. 20 mΩ) wird als Meßwiderstand (Shunt) verwendet.

An den Anschluß **1** des Integrierten Schaltkreises **16** ist als Schaltelement ein Blinkrelais **17** angeschlossen, dessen zwei Relaiskontakte **17'** und **17"** als Last Blinklampen **19** über einen Warnblinkschalter **20** oder über einen Richtungsblinkschalter **21** aktivieren. Zusätzlich sind in der Fig. 1 noch der an Klemme 15 angeschlossene Zündschalter **22** und die Fahrzeugbatterie **23** des Fahrzeugs dargestellt, wobei die genaue Beschaltung des Warnblinkschalters **20**, der die Blinklampen **19** auch bei ausgeschaltetem Zündschalter **22** aktivieren können muß, einem Fachmann bekannt und deshalb nicht dargestellt ist.

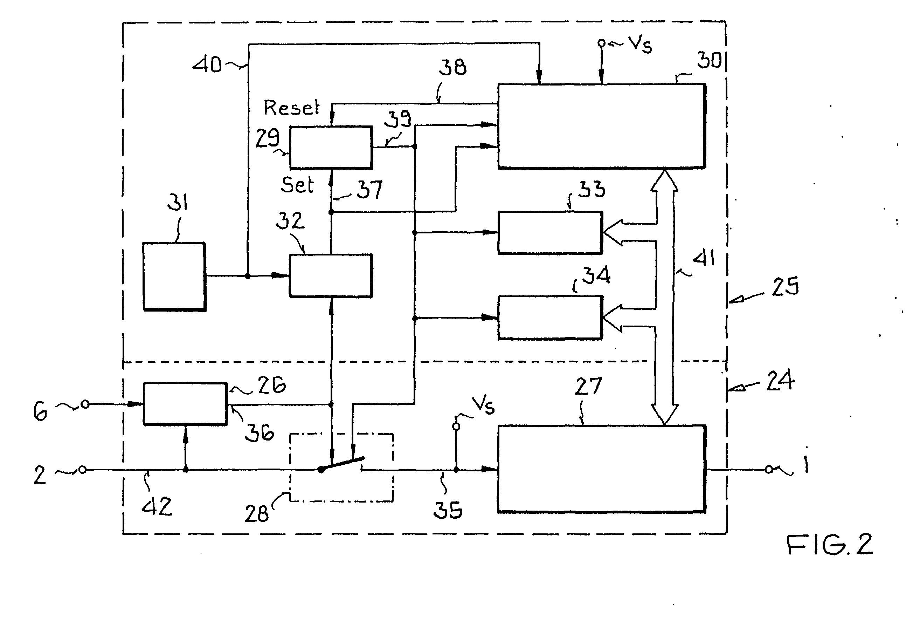

**Fig. 2** zeigt den für die Betriebsart "Warnblinken" wesentlichen Teil der im Integrierten Schaltkreis **16** (Fig. 1) enthaltenen Schaltungsanordnung, bestehend aus einem analogen Schaltungsteil **24** und einem digitalen Schaltungsteil **25.** Der analoge Schaltungsteil **24** enthält eine Eingangskomparatorschaltung **26** mit dem Warnblinkeingang Pin **6** zum Vergleich eines vom Warnblinkschalter **20** kommenden Einschaltsignals mit einem vorgegebenem Schwellwert beim Einschalten der Betriebsart "Warnblinken", eine Relaistreiberschaltung **27** mit dem Relaistreiberausgang Pin **1** zum Ansteuern des Relais **17** (Fig. 1) und eine Spannungsversorgungsschaltung **28** mit einer Verbindungsleitung **42** vom Batterieanschluß Pin **2** und einer Verbindungsleitung **35** zur Spannungsversorgung des analogen Schaltungsteils **24** und des digitalen Schaltungsteils **25.**

Im digitalen Schaltungsteil **25** sind eine Signalhalteschaltung **29,** beispielsweise in Form eines digitalen Flip-Flops, und eine Steuereinheit **30,** in der eine Zeitablaufsteuerung enthalten ist, die wichtigsten Schaltungsteile. Hinzu kommen eine Oszillatorschaltung **31** zur Takterzeugung, eine Entprellschaltung **32,** die beispielsweise aus mehreren hintereinander geschalteten Flip-Flops mit entsprechender Verknüpfung ihrer jeweiligen Ausgänge besteht, eine Frequenzerhöhungsschaltung mit Decodermatrix **33** zur Erhöhung der Blinkfrequenz in der Betriebsart "Richtungsblinken" bei ausgefallenen Blinklampen **19** (Fig. 1) und eine Logikschaltung mit Speicher **34,** die beispielsweise durch einen angeschlossenen Anhänger hinzugekommene Blinklampen erkennt und daraufhin eine Lampenausfallkontrollschwelle erhöht.

Eine Verbindungsleitung **36** verbindet die Eingangskomparatorschaltung **26** sowohl mit der Spannungsversorgungsschaltung **28** als auch mit der Entprellschaltung **32.** Die Signalhalteschaltung **29** wird durch ein Signal der Entprellschaltung **32** mittels einer Verbindungsleitung **37** gesetzt und durch ein Signal der Steuereinheit **30** mittels einer Verbindungsleitung **38** zurückgesetzt und führt ihrerseits mittels einer Verbindungsleitung **39** der Steuereinheit **30,** der Spannungsversorgungsschaltung **28,** der Frequenzerhöhungsschaltung **33** und der Logikschaltung **34** ein Signal zu. Die Oszillatorschaltung **31** führt mittels einer Verbindungsleitung **40** den digitalen Schaltungsteilen, beispielsweise der Entprellschaltung **32** und der Steuereinheit **30,** Taktsignale zu. Schließlich ist die Entprellschaltung **32** über die Verbindungsleitung **37** noch mit der Steuereinheit **30** verbunden, und eine Datenleitung **41** verbindet die Relaistreiberschaltung **27,** die Logikschaltung mit Speicher **34,** die Frequenzerhöhungsschaltung mit Decodermatrix **33** und die Steuereinheit **30** untereinander.

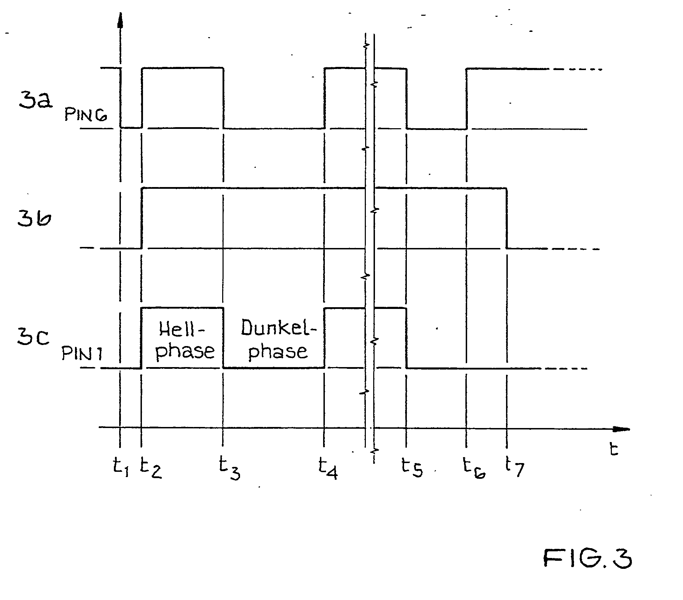

In **Fig. 3** sind Zeitdiagramme von Signalverläufen an verschiedenen Pins des Integrierten Schaltkreises **16** (Fig. 1) in der Betriebsart "Warnblinken" dargestellt, und zwar zeigt das Diagramm 3a den zeitlichen Signalverlauf am Warnblinkeingang Pin **6,** das Diagramm 3b den zeitlichen Signalverlauf am Ausgang der Signalhalteschaltung **29** (Fig. 2) und das Diagramm 3c den zeitlichen Signalverlauf am Relaistreiberausgang Pin **1.**

Im weiteren soll anhand der Figuren 1 bis 3 der Ablauf der Betriebsart "warnblinken" bei ausgeschalteter Zündung erläutert werden.

Bei geöffnetem Warnblinkschalter **20** sind, mit Ausnahme der Eingangskomparatorschaltung **26,** durch Ausschalten einer Versorgungsspannung **vₛ** in der Spannungsversorgungsschaltung **28** die Schaltungsteile **27** bis **34** abgeschaltet. Beim Schließen des Warnblinkschalters **20** beispielsweise zu einem Zeitpunkt **t₁** wird der am Warnblinkeingang Pin **6** des Integrierten Schaltkreises **16** anstehende High-Pegel über den Widerstand **R₄,** den Warnblinkschalter **20** und die Blinklampen **19** kurzzeitig auf Massepotential (Low-Pegel) gezogen. Dadurch wird zum einen die (bei ausgeschalteter Zündung abgeschaltete) Spannungsversorgungsschaltung **28** durch ein Signal auf der Verbindungsleitung **36** aktiviert und dadurch die Versorgungsspannung **Vₛ** zur Versorgung der Schaltungsteile **27** bis **34** des Integrierten Schaltkreises **16** bereitgestellt. Das Signal auf der Verbindungsleitung **36** wird auch der Entprellschaltung **32** zugeführt, die wiederum mit einem jetzt entprellten Signal über die Verbindungsleitung **37** ein Haltesignal in der Signalhalteschaltung **29** setzt und auch der Steuereinheit **30** ein Signal zuführt. Die Steuereinheit **30** beginnt daraufhin, alle weiteren Abläufe nach einem festgelegten Zeitablaufplan zu steuern, insbesondere die Hell- und Dunkelphasen beim Blinken durch Zuführen entsprechender Befehle an die Relaistreiberschaltung **27** mittels der Datenleitung **41.**

Zum anderen führt die Relaistreiberschaltung **27** beispielsweise zu einem Zeitpunkt **t₂** über den Relaistreiberausgang Pin **1** dem Blinkrelais **17** ein Signal zu, wodurch über die Relaiskontakte **17'** und **17"** durch die Blinklampen **19** ein Strom fließt und eine Hellphase beginnt (Blinklampen **19** sind hell). Nach Ablauf der durch die Zeitablaufsteuerung festgelegten Dauer der Hellphase wird der Relaistreiberausgang Pin **1** durch die Steuereinheit **30** zurückgesetzt, so daß beispielsweise zum Zeitpunkt **t₃** eine Dunkelphase beginnt (Blinklampen **19** sind dunkel).

Es wurde bereits beschrieben, daß ohne weitere Maßnahmen der Integrierte Schaltkreis **16** in einen ungewollten Schwingbetrieb übergehen würde, sobald die Blinklampen **19** hochohmig werden. Um dies zu verhindern, wird der, durch das beim Einschalten des Warnblinkschalters **20** kurzzeitig zugeführte Low-Signal, erzeugte High-Pegel in der Signalhalteschaltung **29** als Haltesignal weiterhin gehalten (siehe Kurvenverlauf 3b). Dieses mittels der Verbindungsleitung **39** der Spannungsversorgungsschaltung **28** zugeführte Haltesignal bewirkt, daß die Versorgungsspannung **Vₛ** bei geschlossenem Warnblinkschalter **20** und brennenden Blinklampen **19** (High-Pegel am Warnblinkausgang Pin **6**) aufrechterhalten wird und somit die Schaltungsteile **27** bis **34** eingeschaltet bleiben.

Das am Ausgang der Signalhalteschaltung **29** auf der Verbindungsleitung **39** anstehende Signal bewirkt zudem, daß bei einer oder mehreren ausgefallenen Blinklampen **19** die Frequenzerhöhungsschaltung **33** keine Frequenzerhöhung vornimmt, da eine Frequenzerhöhung bei ausgefallenen Blinklampen **19** nur in der Betriebsart "Richtungsblinken" (Blinken nach rechts oder links) und somit bei eingeschalteter Zündung vorgenommen wird. Außerdem bewirkt dieses Signal, daß (in der Betriebsart "Warnblinken" bei ausgeschalteter Zündung) die Logikschaltung **34** nicht überprüft, ob beispielsweise durch Anschließen eines Anhängers weitere Blinklampen **19** zum Blinkschaltkreis hinzugekommen sind, wie dies im normalen Blinkbetrieb bei eingeschalteter Zündung der Fall ist.

Während jeder Dunkelphase wird die Stellung des Warnblinkschalters **20** überprüft. Solange der Warnblinkschalter **20** geschlossen ist, wird nach Ablauf einer Dunkelphase, beispielsweise zu einem Zeitpunkt **t₄,** eine weitere Hellphase eingeleitet, indem in der Relaistreiberschaltung **27** der Relaistreiberausgang Pin **1** durch ein Signal von der Steuereinheit **30** über die Datenleitung **41** beispielsweise bis zu einem Zeitpunkt **t₅** wieder aktiviert wird.

Beispielsweise zu einem Zeitpunkt **t₆** wird der Warnblinkschalter **20** geöffnet und somit die Funktion "Warnblinken" ausgeschaltet. Das in der Signalhalteschaltung **29** anstehende Haltesignal wird jedoch nicht sofort zum Zeitpunkt **t₆** zurückgenommen, sondern erst dann, wenn die ab dem Zeitpunkt **t₆** beginnende Dunkelphase beispielsweise zu einem Zeitpunkt **t₇** abgelaufen ist. Zum Löschen des Haltesignals wird der Signalhalteschaltung **29** von der Steuereinheit **30** über die Verbindungsleitung **38** zum Zeitpunkt **t₇** ein Rücksetzsignal zugeführt. Das am Ausgang der Signalhalteschaltung **29** anstehende Signal wird zurückgenommen und die Spannungsversorgungsschaltung **28** daraufhin abgeschaltet. Wenn während einer Hellphase der Warnblinkschalter **20** geöffnet wird, so wird zuerst die aktuelle Hellphase und danach die sich anschließende Dunkelphase abgeschlossen, bevor das Haltesignal in der Signalhalteschaltung **29** zurückgenommen wird.

Die beschriebene Schaltungsanordnung zum Warnblinken für ein Fahrzeug ist in einem Integrierten Schaltkreis mit acht Anschlüssen untergebracht und zeichnet sich besonders durch einen sehr kleinen Ruhestrom von 10 µA aus.

## Patentansprüche

1. Elektronischer Blinkgeber für ein Fahrzeug zum Warnblinken, mit einer Eingangskomparatorschaltung (26) mit einem Warnblinkeingang (6) zum Vergleich eines Einschaltsignals eines Warnblinkschalters (20) mit einem Schwellenwert, mit einer Spannungsversorgungsschaltung (28) mit Batterieanschluß (2) zur Spannungsversorgung des elektronischen Blinkgebers, mit einer Relaistreiberschaltung (27) mit Relaistreiberausgang (1) zum Ansteuern eines Blinkrelais und mit einer Steuereinheit (30) zur zeitlichen Steuerung von Hell- und Dunkelphasen von Blinklampen (19) beim Blinken, **dadurch gekennzeichnet, daß**
a) die Eingangskomparatorschaltung (26) zum Einschalten der Spannungsversorgung beim Schließen des Warnblinkschalters (20) mittels einer ersten Verbindungsleitung (36) mit der Spannungsversorgungsschaltung (28) verbunden ist,
b) die Eingangskomparatorschaltung (26) über die erste Verbindungsleitung (36) auch mit einer Signalhalteschaltung (29) zum Setzen eines Haltesignals während der Hellphasen bei geschlossenem Warnblinkschalter (20) verbunden ist,
c) die Steuereinheit (30) zur Steuerung des Zeitablaufs der Hell- und Dunkelphasen mittels einer Datenleitung (41) mit der Relaistreiberschaltung (27) verbunden ist,
d) die Steuereinheit (30) mittels einer zweiten Verbindungsleitung (38) mit der Signalhalteschaltung (29) zum Zurücksetzen des Haltesignals bei geöffnetem Warnblinkschalter (20) verbunden ist und
e) die Signalhalteschaltung (29) mittels einer dritten Verbindungsleitung (39) mit der Spannungsversorgungsschaltung (28) zur Aufrechterhaltung der Spannungsversorgung bei gesetztem Haltesignal und zum Abschalten der Spannungsversorgung bei zurückgesetztem Haltesignal verbunden ist.

2. Elektronischer Blinkgeber nach Anspruch 1, **dadurch gekennzeichnet, daß** die Signalhalteschaltung (29) mittels der dritten Verbindungsleitung (39) auch einer Frequenzerhöhungsschaltung mit Decodermatrix (33) ein Signal zuführt und dadurch in der Betriebsart "Warnblinken" bei ausgefallenen Blinklampen (19) eine Frequenzerhöhung beim Blinken ausbleibt.

3. Elektronischer Blinkgeber nach Anspruch 1, **dadurch gekennzeichnet, daß** die Signalhalteschaltung (29) mittels der dritten Verbindungsleitung (39) auch einer Logikschaltung mit Speicher (34) ein Signal zuführt und dadurch in der Betriebsart "Warnblinken" zusätzlich angeschlossene Blinklampen (19) zu keiner Erhöhung einer Lampenausfallkontrollschwelle führen.

4. Elektronischer Blinkgeber nach Anspruch 1, **dadurch gekennzeichnet, daß** zwischen die Eingangskomparatorschaltung (26) und die Signalhalteschaltung (29) eine Entprellschaltung (32) geschaltet ist.

5. Elektronischer Blinkgeber nach Anspruch 4, **dadurch gekennzeichnet, daß** es sich bei der Entprellschaltung (32) um eine digitale Entprellschaltung in Form von hintereinandergeschalteten Flip-Flops mit entsprechender Verknüpfung ihrer jeweiligen Ausgänge handelt.

6. Elektronischer Blinkgeber nach Anspruch 1, 4 und 5, **dadurch gekennzeichnet, daß** eine Oszillatorschaltung (31) zur Takterzeugung mittels einer vierten Verbindungsleitung (40) mit der digitalen Entprellschaltung (32) und der Steuerschaltung (30) verbunden ist.

7. Elektronischer Blinkgeber nach Anspruch 1, **dadurch gekennzeichnet, daß** die Überprüfung der Stellung des Warnblinkschalters (20) während der Dunkelphasen, d.h. bei ausgeschalteten Blinklampen (19) erfolgt.

8. Elektronischer Blinkgeber nach einem der vorangehenden Ansprüche, **dadurch gekennzeichnet, daß** die Schaltungsanordnung als Integrierter Schaltkreis (16) realisiert und in einem achtpoligen Gehäuse angeordnet ist.

## Claims

1. Electronic flasher for a vehicle for warning flashing, with an input comparator circuit (26) with a warning flasher input (6) for comparison of a switch-on signal of a warning flasher circuit (20) with a threshold value, with a voltage supply circuit (28) with battery connection (2) for voltage supply of the electronic flasher, with a relay driver circuit (27) with a relay driver output (1) for drive control of a flasher relay and with a control unit (30) for timed control of bright and dark phases of flasher lamps (12) during the flashing, **characterised in that**
a) the input comparator circuit (26) for switching-on the voltage supply is connected, on closing of the warning flasher switch (20), by means of a first connecting line (26) with the voltage supply circuit (28),
b) the input comparator circuit (26) is also connected by way of the first connecting line (36) with a signal holding circuit (29) for setting a holding signal during the bright phases when the warning flasher switch (20) is closed,
c) the control unit (30) for controlling the time sequence of the bright and dark phases is connected by means of a data line (41) with the relay driver circuit (27),
d) the control unit (30) is connected by means of a second connecting line (38) with the signal holding circuit (29) for resetting the holding signal when the warning flasher switch (20) is open and
e) the signal holding circuit (29) is connected by means of a third connecting line (39) with the voltage supply circuit (28) for maintenance of the voltage supply when the holding signal is set and for switching-off the voltage supply when the holding signal is reset.

2. Electronic flasher according to claim 1, **characterised in that** the signal holding circuit (29) also feeds a signal by means of the third connecting line (39) to a frequency increasing circuit with decoder matrix (33) and thereby a frequency increase in the case of flashing is excluded in the operating mode 'warning flashing' when the flasher lamps (19) have failed.

3. Electronic flasher according to claim 1, **characterised in that** the signal holding circuit (29) also feeds a signal by means of the third connecting line (39) to a logic circuit with memory (34) and thereby does not lead to any increase in a lamp failure check threshold in the operating mode of 'warning flashing' of additionally connected flasher lamps (19).

4. Electronic flasher according to claim 1, **characterised in that** an antibeat circuit (32) is connected between the input comparator circuit (26) and the signal holding circuit (29).

5. Electronic flasher according to claim 4, **characterised in that** the antibeat circuit (32) is a digital antibeat circuit in the form of flip-flops, which are connected one after the other, with corresponding linking of their respective outputs.

6. Electronic flasher according to claim 1, 4 and 5, **characterised in that** an oscillator circuit (31) for clock pulse generation is connected by means of a fourth connecting line (40) with the digital antibeat circuit (32) and the control circuit (30).

7. Electronic flasher according to claim 1, **characterised in that** checking of the setting of the warning flasher switch (20) is carried out during the dark phases, i.e. when the flasher lamps (19) are switched off.

8. Electronic flasher according to one of the preceding claims, **characterised in that** the circuit arrangement is realised as an integrated circuit (16) and arranged in an eight-pole housing.

## Revendications

1. Clignotant électronique pour feux de détresse d'un véhicule, comportant un circuit d'entrée à comparateur (26) présentant une entrée de feu de détresse (6) pour comparer le signal de commutation d'un interrupteur de feu de détresse (20) à une valeur de seuil, un circuit d'alimentation en tension (28) relié à une batterie (2) pour l'alimentation en tension du clignotant électronique, un circuit d'attaque à relais (27) avec sortie d'attaque à relais (1) pour commander un relais de clignotant et une unité de commande (30) pour la commande temporelle de phases de clarté et de phases sombres de lampes clignotantes (19) lors du clignotement, **caractérisé en ce que**
a) le comparateur d'entrée (26) est relié au circuit d'alimentation en tension (28) pour mettre en circuit l'alimentation en tension lors de la fermeture de l'interrupteur de feu de détresse (20) au moyen d'une première ligne (36),
b) le comparateur d'entrée (26) est également relié par la première ligne (36) à un circuit de signal (29) d'arrêt pour délivrer un signal d'arrêt pendant les phases de clarté lorsque l'interrupteur de feu de détresse (20) est fermé,
c) l'unité de commande (30) pour commander le déroulement temporel des phases de clarté et des phases sombres est reliée au commutateur de relais d'attaque (27) au moyen d'une ligne de données (41),
d) l'unité de commande (30) est reliée au moyen d'une deuxième ligne (38) au circuit de signal d'arrêt (29) pour remettre à zéro le signal d'arrêt lorsque le commutateur de feu de détresse (20) est ouvert, et
e) le circuit de fin de signal (29) est relié au moyen d'une troisième ligne (39) au commutateur d'alimentation en tension (28) pour assurer l'alimentation en tension lorsque le signal d'arrêt est appliqué et pour couper l'alimentation en tension lorsque le signal d'arrêt est remis à zéro.

2. Clignotant électronique selon la revendication 1, **caractérisé en ce que** le circuit de signal d'arrêt (29) transmet également au moyen de la troisième ligne (39) un signal à un circuit d'augmentation de fréquence à matrice de décodage (33), de sorte que dans le mode de fonctionnement "feu de détresse clignotant" lorsque les lampes clignotantes (19) sont défaillantes il n'y a pas d'augmentation de fréquence lors du clignotement.

3. Clignotant électronique selon la revendication 1, **caractérisé en ce que** le circuit de signal d'arrêt (29) transmet également au moyen de la troisième ligne (39) un signal à un circuit logique à mémoire (34) de sorte que dans le mode de fonctionnement "feu de détresse clignotant", le branchement de lampes clignotantes (19) supplémentaires ne conduit à aucune élévation du seuil de contrôle de défaillance de lampes.

4. Clignotant électronique selon la revendication 1, **caractérisé en ce qu'**un circuit de suppression des interférences (32) est monté entre le circuit d'entrée à comparateur (26) et le circuit de signal d'arrêt (29).

5. Clignotant électronique selon la revendication 4, **caractérisé en ce que** pour le circuit de suppression des interférences (32) il s'agit d'un circuit numérique de suppression des interférences sous la forme de bascules bistables montées les unes derrière les autres avec liaison correspondante de leurs sorties respectives.

6. Clignotant électronique selon la revendication 1, 4 et 5, **caractérisé en ce qu'**un circuit d'oscillateur (31) est relié au moyen d'une quatrième ligne (40) au circuit de suppression des interférences (32) et au circuit de commande (30) pour générer la cadence.

7. Clignotant électronique selon la revendication 1, **caractérisé en ce que** le contrôle de la position de l'interrupteur de feu de détresse (20) est effectué pendant les phases sombres, c'est-à-dire lorsque les lampes clignotantes (19) sont éteintes.

8. Clignotant électronique selon l'une quelconque des revendications précédentes, **caractérisé en ce que** le circuit des commutateurs est réalisé sous la forme d'un circuit électrique (16) intégré, et disposé dans un boîtier à huit pôles.
